# FASCICULE DE BREVET EUROPEEN

(11) **EP 2 084 062 B1**
(45) Date de publication et mention de la délivrance du brevet: **07.07.2010**
(21) Numéro de dépôt: 07848233.8
(22) Date de dépôt: 14.09.2007
(51) Int. Cl.: B64D 29/06, F02K 1/72, B64D 15/12, B64D 29/08

(54) **NACELLE POUR TURBOREACTEUR A OUVERTURE LATERALE**
SEITLICH ÖFFNENDE TRIEBWERKSGONDEL
SIDE-OPENING JET ENGINE NACELLE

(30) Priorité: 31.10.2006 FR 0609540
(43) Date de publication de la demande: 05.08.2009
(73) Titulaire: Aircelle, 76700 Gonfreville l'Orcher (FR)
(72) Inventeur: VAUCHEL, Guy Bernard, F-76610 Le Havre (FR); CAZUC, Xavier, F-76610 Le Havre Rouelles (FR)
(74) Mandataire: Gaillarde, Frédéric F. Ch.
(86) Numéro de dépôt international: PCT/FR2007/001494
(87) Numéro de publication internationale: WO 2008/053087

(56) Documents cités:
- FR-A- 2 855 497
- FR-A1- 2 673 972
- FR-A1- 2 771 710
- FR-A1- 2 772 342
- US-A- 3 541 794

## Description

La présente invention concerne une nacelle pour turboréacteur.

Un avion est propulsé par plusieurs turboréacteurs logés chacun dans une nacelle abritant également un ensemble de dispositifs d'actionnement annexes liés à son fonctionnement, tel qu'un dispositif d'inversion de poussée, et assurant diverses fonctions lorsque le turboréacteur est en fonctionnement ou à l'arrêt.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (ou une structure interne de la structure aval de la nacelle et entourant le turboréacteur) et une paroi interne de la nacelle. Les deux flux d'air sont éjectés du turboréacteur par l'arrière de la nacelle.

Chaque ensemble propulsif de l'avion est donc formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La nacelle est généralement équipée de capots mobiles pouvant s'ouvrir pour permettre un accès au turboréacteur lors d'opérations de maintenance. Ces capots mobiles sont généralement situés au niveau de la section médiane entourant la soufflante ou du générateur de gaz du turboréacteur au niveau duquel ils peuvent intégrer un dispositif d'inversion de poussée.

De manière habituelle, ces capots présentent une courbure adaptée à l'environnement du turboréacteur lui permettant de s'intégrer dans la nacelle et d'en assurer la continuité aérodynamique en position de fermeture. Ils sont généralement rattachés au pylône supportant la nacelle par des moyens d'attache permettant leur articulation autour d'un axe sensiblement parallèle à un axe longitudinal de la nacelle et présentent un bord inférieur équipé de moyens de verrouillage permettant leur maintien en position de fermeture lors d'opérations de vol. La manoeuvre d'ouverture des capots s'effectue après ouverture des moyens de verrouillage en les faisant pivoter autour dés moyens d'attache solidaires du pylône.

Le pylône fait ainsi office de structure fixe porteuse pour les axes d'articulation des capots.

Une telle nacelle est connu de FR-2772342, qui montre toutes les caractéristiques du préambule de la revendication 1.

Cependant, dans certaines configurations d'ensemble propulsif d'avion, aucune structure fixe n'est disponible au dessus de la nacelle pour servir de support à des axes d'articulation des capots mobiles. Il devient alors difficile, voire impossible, d'accéder au turboréacteur sans recourir, par exemple, à de lourds outillages de maintenance pour déposer les capots mobiles.

La présente invention vise à éviter ces inconvénients et a pour objet à cet effet une nacelle pour turboréacteur, comprenant une entrée d'air en amont du turboréacteur, une section médiane destinée à entourer une soufflante du turboréacteur et une section aval, la nacelle comportant en outre au moins une paire de capots mobiles disposés de part et d'autre d'un plan vertical longitudinal de symétrie de la nacelle et articulés sensiblement parallèlement à un axe longitudinal de la nacelle de manière à pouvoir s'ouvrir pour donner accès au turboréacteur, et où les capots mobiles sont appariés par des moyens d'attache permettant leur articulation l'un sur l'autre autour d'axes distincts ou confondus, et où chaque capot mobile comporte des moyens de liaison permanente et des moyens pour le lier temporairement, lorsqu'il est fermé, en rotation avec une structure fixe de la nacelle.

Ainsi, l'idée à la base de l'invention consiste à articuler les capots mobiles l'un sur l'autre et à lier chaque capot en rotation avec la nacelle, de manière permanente ou uniquement lorsque le capot est fermé afin qu'il ne risque pas de basculer autour de l'axe longitudinal de la nacelle sous le poids de l'autre capot ouvert.

Les capots mobiles peuvent être disposés en section médiane de la nacelle.

Les capots mobiles peuvent aussi être disposés en section aval de la nacelle. La section aval de la nacelle comprend par exemple un dispositif d'inversion de poussée.

Ladite structure fixe de la nacelle est par exemple un carter destiné à entourer la soufflante du turboréacteur.

Lesdits moyens de liaison permanente peuvent comprendre un support, fixé sur la structure fixe de nacelle, et qui porte les axes d'articulation des capots. L'axe d'articulation du capot est réalisé par exemple entre le support et une attache reliant les deux capots, ladite attache étant reliée à la structure du turboréacteur par l'intermédiaire d'au moins une et, de préférence, deux bielles de soutien.

Chaque capot peut être lié à la structure fixe de nacelle par l'intermédiaire d'un couteau ménagé dans une structure du capot et d'une gorge périphérique ménagée dans la structure fixe de nacelle, et lesdits moyens de liaison temporaire en rotation peuvent comprendre une découpe réalisée dans le couteau et prévue pour recevoir une partie saillante formant butée ménagée dans la gorge périphérique.

Les positions de la découpe et de la butée correspondante sont déterminées par exemple de manière à ce qu'un jeu entre la découpe et la butée soit coplanaire avec l'axe d'articulation du capot, et ainsi réduit à un minimum.

Selon une possibilité, lesdits moyens de liaison temporaire en rotation comprennent un pêne de verrouillage qui est monté coulissant dans une structure en partie supérieure de chaque capot, parallèlement à son axe d'articulation, entre une position rétractée et une position d'engagement dans un orifice de retenue de forme adaptée prévu dans la structure fixe de nacelle, et en ce qu'un coulisseau d'indexage de forme allongée est monté mobile entre lesdits orifices de retenue en partie supérieure de la structure fixe de nacelle et comporte des moyens pour, en cas de retrait d'un pêne hors de son orifice de retenue, immobiliser le pêne de l'autre capot en position enclenchée empêchant ainsi une ouverture simultanée des deux capots.

Le pêne de chaque capot par exemple est à s'engager dans un trou traversant prévu à chaque extrémité du coulisseau et de tendre des moyens élastiques de rappel du coulisseau, de sorte qu'un retrait d'un des pênes entraîne une translation du coulisseau vers le pêne du capot resté fermé et une immobilisation de ce dernier au moyen d'un ergot de blocage saillant sur une paroi proximale du trou traversant correspondant et apte à s'engager dans une ouverture transversale du pêne.

Ces dispositions assurent un indexage du système de verrouillage des capots qui empêche une ouverture simultanée des deux capots, le capot resté fermé ne pouvant pas basculer car lié au carter de soufflante.

Selon une possibilité, lesdits moyens de liaison temporaire en rotation comprennent un crochet de verrouillage qui est monté dans une structure en partie inférieure de chaque capot, et articulé parallèlement au capot, le crochet de verrouillage étant prévu pour, lorsque le capot est fermé, s'accrocher à une base d'amarrage fixée à la structure fixe de nacelle, le pivotement du crochet de verrouillage étant commandé par un levier d'ouverture du capot monté pivotant entre des positions d'ouverture et de fermeture dans une enceinte en partie inférieure du capot, et un crochet de blocage est monté pivotant et prévu pour s'accrocher à une extrémité radiale de forme adaptée du levier en vue d'immobiliser ce dernier en position de fermeture, le pivotement du crochet de blocage étant déclenché par un organe de signalisation apte à signaler l'ouverture de l'un ou l'autre des capots.

Chaque capot comporte par exemple en partie inférieure une baguette de signalisation d'ouverture montée mobile en translation, sous l'action d'un ressort de rappel, entre une position rétractée et une position saillante par rapport à un plan longitudinal vertical de symétrie de la nacelle, les baguettes de signalisation des deux capots venant, lorsque ceux-ci sont fermés, en appui l'une contre l'autre de manière à se maintenir mutuellement en position rétractée, et ledit crochet de blocage présente un ergot latéral de guidage monté coulissant dans une lumière oblongue de guidage ménagée dans la baguette de sorte qu'une translation de la baguette s'accompagne d'un pivotement du crochet de blocage.

Selon un autre aspect de l'invention, les capots peuvent être articulés par des chapes d'articulation autour d'un axe d'articulation commun, et un dispositif de carénage mobile soutenu au-dessus de l'axe d'articulation commun et relié aux chapes d'articulation des capots par un ensemble de bielles d'articulation entrecroisées, peut recouvrir la zone d'articulation des capots et assurer une jointure entre les parois externes des capots afin de préserver l'aérodynamisme de la nacelle lorsque les capots sont fermés.

La mise en oeuvre de l'invention sera mieux comprise à la l'aide de la description détaillée qui est exposée ci-dessous en regard du dessin annexé dans lequel :
La figure 1 est une vue schématique en coupe longitudinale d'une nacelle selon l'invention.
La figure 2 est une vue de la face postérieure d'une nacelle selon une première forme de réalisation de l'invention.
Les figures 3 et 4 sont deux vues schématiques partiellement de dessus, selon la flèche III de la figure 2, illustrant deux positions de fonctionnement d'un dispositif de verrouillage de l'ouverture des capots mobiles de la nacelle.
Les figures 5 et 6 sont deux vues de la face postérieure d'une nacelle selon l'invention qui illustrent deux positions de fonctionnement d'un autre dispositif de verrouillage de l'ouverture des capots mobiles de la nacelle.
La figure 7 est une vue agrandie d'un détail de la figure 6.
Les figures 8 et 9 sont deux vues de la face postérieure de la nacelle qui représentent deux positions de fonctionnement d'un dispositif de carénage mobile prévu pour recouvrir une région d'articulation des capots mobiles.
La figure 10 une vue de la face postérieure d'une nacelle selon encore une autre forme de réalisation de l'invention.
La figure 11 est une vue analogue à la figure 1 de la nacelle de la figure 10, qui représente un dispositif de liaison permanente des capots mobiles de la nacelle avec une structure fixe du turboréacteur.

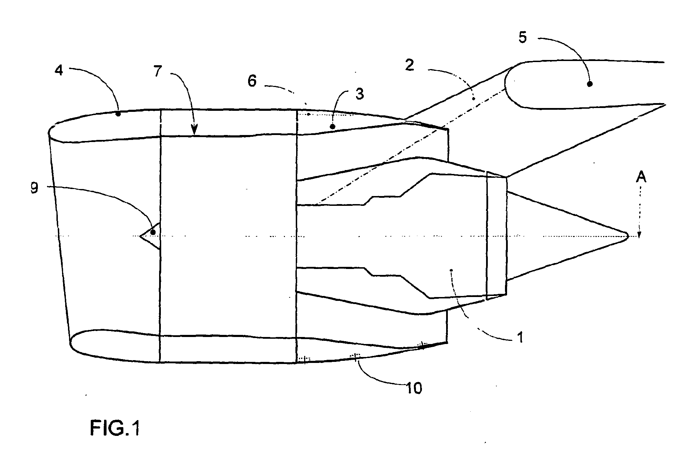

La figure 1 représente un ensemble propulsif d'avion comprenant une nacelle qui constitue un logement tubulaire pour un turboréacteur 1 double flux et sert à canaliser les flux d'air chaud et froid qu'il génère.

La nacelle possède une structure comprenant une section avant 4 formant une entrée d'air, une section médiane dont un carter 7 interne entoure la soufflante 9 du turboréacteur 1, et une section arrière entourant le turboréacteur 1 et équipée de deux capots mobiles 3 d'inverseur de poussée.

Les capots mobiles 3, de forme générale sensiblement semi-cylindrique, sont articulés chacun autour d'un axe 6 sensiblement parallèle à un axe longitudinal A de la nacelle de manière à s'ouvrir pour permettre un accès au turboréacteur 1 lors d'opérations de maintenance, et ils présentent un bord inférieur équipé de poignées d'ouverture 10.

Le turboréacteur 1 est suspendu à une aile 5 de l'avion par l'intermédiaire d'un pylône ou mât 2 rattaché au turboréacteur 1 dans sa partie avant.

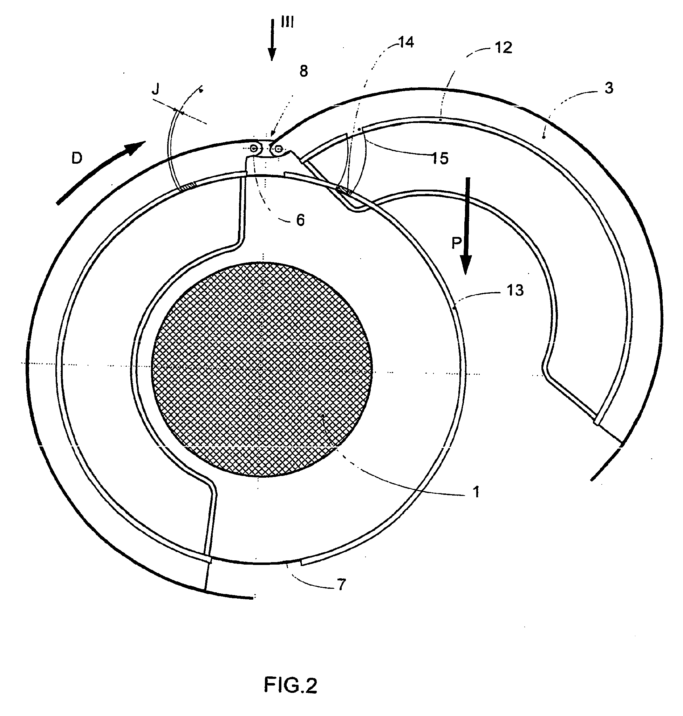

Dans cette configuration, aucune structure fixe n'étant disponible au dessus de la nacelle pour supporter les axes d'articulation 6 des capots mobiles 3, les deux capots 3 sont, dans une première forme de réalisation de l'invention représentée sur la figure 2, rattachés l'un à l'autre par des ferrures d'attache 8 permettant leur articulation autour d'axes 6 distincts ou confondus.

Une liaison entre chaque capot mobile 3 d'inverseur et le turboréacteur 1 est assurée entre un couteau 12, prévu en amont du capot 3, et une gorge périphérique 13 ménagée en aval du carter de soufflante 7.

Lorsque l'un des capots mobiles 3 est levé et ouvert, son poids P tend à entraîner l'autre capot 3 resté fermé en rotation dans une direction D autour de l'axe longitudinal A. Afin d'éviter tout risque de basculement du capot 3 fermé, le couteau 12 du capot 3 présente une découpe en empochement 15 prévue pour recevoir une partie saillante de forme complémentaire formant butée 14, ménagée en correspondance dans la gorge périphérique 13 du carter de soufflante 7.

Lorsque l'un des capots 3 est ouvert, il entraîne de son poids P le capot 3 resté fermé qui bascule légèrement dans la direction D autour de l'axe longitudinal A, jusqu'à ce que la butée 14 heurte une paroi latérale de l'empochement 15 correspondant et bloque ainsi le capot 3 fermé en rotation autour de l'axe A. Les positions de l'empochement 15 du couteau 12 et de la butée 14 correspondante de la gorge 13 sont déterminées de manière à ce que l'axe d'articulation 6 du capot 3 soit coplanaire avec le jeu J entre l'empochement 15 et la butée 14 correspondante. Ainsi, les dimensions du jeu J peuvent être réduites de manière à limiter le basculement résiduel dans la direction D (avant arrêt en rotation) du capot 3.

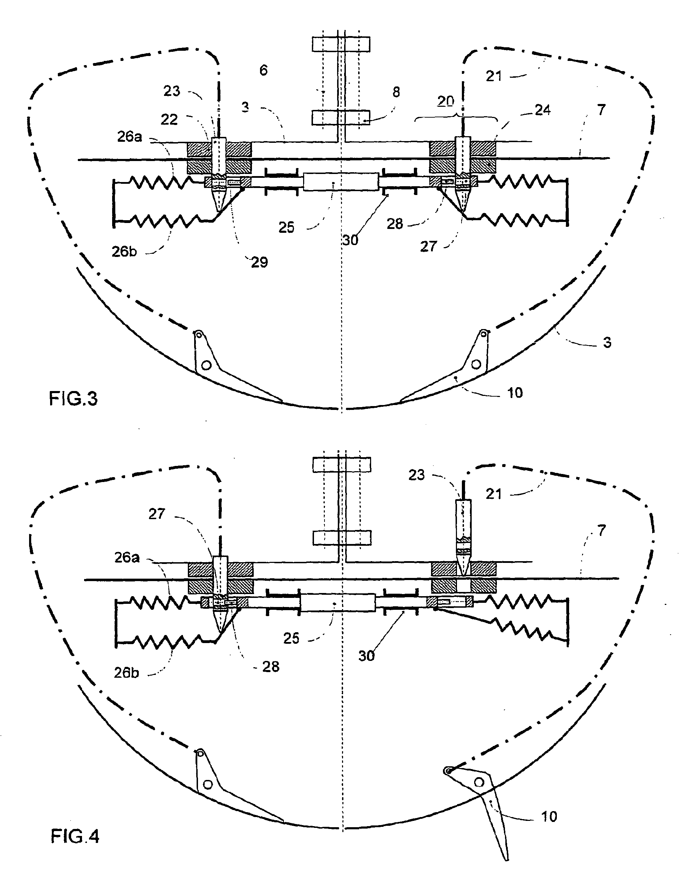

La poignée d'ouverture 10 permet de désactiver un dispositif 20 de verrouillage mécanique avec le carter de soufflante 7, illustré sur les figures 3 et 4, qui empêche à la fois le capot 3 correspondant de s'ouvrir et de basculer autour de l'axe longitudinal A de la nacelle.

Ce dispositif de verrouillage 20 comprend un câble d'actionnement 21, commandé par la poignée 10, prévu pour déplacer un pêne 23 de forme allongée et monté coulissant, parallèlement à l'axe d'articulation 6, dans un logement 22 de forme complémentaire ménagé dans la structure amont du capot 3, entre une position rétractée dans son logement 22 et une position saillante hors de ce logement 22.

Un orifice 24 de forme adaptée est prévu dans la structure aval du carter de soufflante 7 pour recevoir le pêne 23 en position saillante et solidariser ainsi le capot 3 au carter de soufflante 7.

Par souci de sécurité, les deux dispositifs de verrouillage 20 des capots mobiles 3 sont reliés l'un à l'autre par un dispositif d'indexage prévu pour, lorsque l'un des capots 3 est ouvert, immobiliser la poignée 10 du capot 3 resté fermé et empêcher l'ouverture de ce dernier.

Ce dispositif d'indexage comprend un coulisseau 25 en forme de baguette monté mobile en translation, perpendiculairement à l'axe longitudinal A, dans un évidement ménagé dans la structure du carter de soufflante 7. Deux butées de guidage 30 sont prévues de part et d'autre d'un corps principal central du coulisseau 25.

Deux ressorts de compression 26a et de traction 26b sont aussi prévus à chaque extrémité du coulisseau de renvoi 25 pour le rappeler dans une position d'équilibre.

Le coulisseau 25 comporte à chacune de ses extrémités un trou traversant 29 pouvant, selon la position du coulisseau 25, s'aligner avec un des orifices 24 et recevoir le pêne 23 correspondant.

Comme l'indiquent les figures 3 et 4, le diamètre de ces deux trous traversants 29 est sensiblement supérieur au diamètre des orifices 24, mais la distance séparant les parois distales des deux trous traversants 29 est sensiblement égale à la distance séparant les parois distales des orifices 24.

Chacun des deux trous traversants 29 présente un ergot radial 28 saillant sur une paroi proximale et susceptible, selon la position du trou traversant 29 devant l'orifice 24 correspondant, de s'engager dans une ouverture transversale 27 ménagée dans le pêne 23 correspondant de manière à immobiliser ce dernier en position saillante.

L'extrémité des pênes 23 est pointue pour s'engager plus facilement dans les trous traversants 29 du coulisseau 25. La pointe de chaque pêne 23 en position saillante vient en appui contre le ressort de traction 26b coresspondant de manière à le tendre en traction.

En position saillante du pêne 23, celui-ci vient aussi en appui contre la paroi distale du trou traversant 29 correspondant, de manière à comprimer le ressort 26a correspondant.

Lorsque les deux capots mobiles 3 sont fermés (voir figure 3), les deux pênes 23 sont en position saillante dans les orifices 24 du carter de soufflante 7 et traversent les trous traversants 29 du coulisseau 25 de manière à retenir le coulisseau 25 en position d'équilibre avec son corps principal central situé à mi-chemin de ses deux butées de guidage 30.

Les ressorts de rappel 26a et 26b de chaque extrémité du coulisseau 25 sont tendus de façon identique par les pênes 23.

Lorsque l'un des capots mobiles 3 est ouvert, à savoir que le pêne 23 correspondant est rétracté dans son logement 22, les ressorts de rappel 26a et 26b correspondants sont libérés, de sorte que le coulisseau 25 est repoussé en direction du dispositif de verrouillage 20 du capot 3 resté fermé, jusqu'à ce que le corps principal central du coulisseau 25 soit arrêté par une de ses butées de guidage 30.

Dans cette configuration (voir figure 4), ie pêne 23 du capot 3 resté fermé est immobilisé par l'ergot radial 28 du trou traversant 29 correspondant du coulisseau 25. Du fait du déplacement du coulisseau 25, la position du trou traversant 29 devant l'orifice 24 a en effet été modifiée de telle sorte que l'ergot radial 28 pénètre dans l'ouverture transversale 27 du pêne 23 du capot 3 resté fermé.

Ainsi, lorsque l'un des capots mobiles 3 est ouvert, la poignée 10 du capot 3 resté fermé est-elle immobilisée par ce dispositif d'indexage.

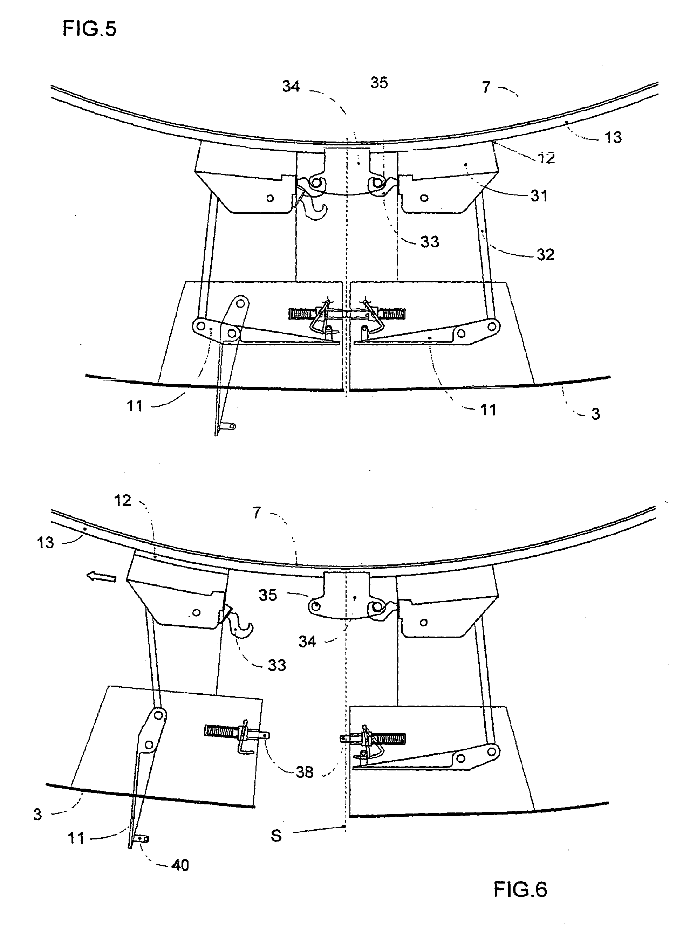

Les figures 5 à 7 montrent encore une autre solution, qui peut être associée ou se substituer aux précédentes, pour arrêter le capot 3 resté fermé en rotation autour de l'axe longitudinal A.

Elle consiste à prévoir un dispositif de verrouillage 31 comportant un crochet articulé 33 prévu pour s'accrocher à une patte 35 correspondante d'une base fixe d'amarrage 34 située en partie inférieure de la gorge périphérique 13 du carter de soufflante 7. Les deux dispositifs de verrouillage 31 sont ainsi disposés en vis-à-vis de part et d'autre de la base fixe d'amarrage 34.

Cette solution permet, lors de l'ouverture d'un des capots mobiles 3, d'éliminer tout basculement résiduel du capot resté fermé 3 autour de l'axe longitudinal A.

Le crochet 33 est actionné, par l'intermédiaire d'un mécanisme de renvoi 32 connu en soi, par un levier d'ouverture 11 en partie inférieure du capot 3 correspondant. Chaque levier 11 est articulé dans une enceinte prévue dans la structure du capot mobile 3 correspondant.

Le levier 11 comporte à son extrémité une patte 40 à laquelle peut s'accrocher un crochet de blocage 39 articulé autour d'un axe fixe 41 prévu dans la structure du capot 3.

Le crochet de blocage 39 est actionné par une baguette de signalisation d'ouverture 38 montée coulissante dans un logement 36 ménagé, entre l'axe 41 et l'extrémité du crochet 39, perpendiculairement à une ligne formée, en position de blocage du levier 11 par le crochet 39, par l'axe d'articulation 41 et la patte 40 du levier 11.

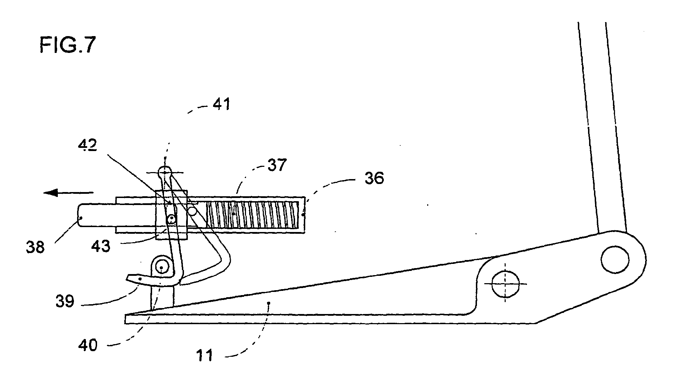

La baguette 38 présente une lumière oblongue transversale de guidage 42 prévue pour recevoir un ergot latéral de guidage 43 du crochet 39, de sorte qu'une translation de la baguette 38, sous l'action de rappel d'un ressort de compression 37 monté dans son logement 36, d'une position rétractée dans son logement 36 (voir figure 5) à une position saillante au-delà d'un plan vertical longitudinal S de symétrie de la nacelle (voir figures 6 et 7) s'accompagne d'une translation, dans une direction orthogonale, de l'ergot de guidage 43 du crochet 39 d'une extrémité haute à une extrémité basse de la lumière de guidage 42 de la baguette 38, et donc d'un pivotement du crochet 39 autour de son axe 41 d'une position libre en retrait à une position d'accrochage sur la patte 40 du levier 11.

Comme l'indique la figure 5, lorsque les deux capots 3 sont fermés, leurs baguettes 38 viennent en appui l'une sur l'autre et se maintiennent mutuellement en position rétractée dans leurs logements 36 respectifs, à l'encontre de l'action de rappel de leurs ressorts 37. Les crochets 39 sont par conséquent en position libre en retrait et n'empêchent pas d'actionner les leviers correspondants 11.

Lorsque l'un des capots 3 est ouvert (voir figure 6), les baguettes 38 ne sont plus en appui l'une sur l'autre de sorte que les deux crochets 39 pivotent vers la position d'accrochage.

Le levier 11 du capot 3 ouvert étant actionné, le pivotement du crochet 39 correspondant se fait "dans le vide", tandis que le crochet 39 du capot 3 resté fermé, en pivotant, s'accroche sur la patte 40 du levier 11 correspondant (voir figure 7) et empêche d'ouvrir le capot 3 resté fermé (tant que l'autre capot 3 ouvert ne sera pas refermé).

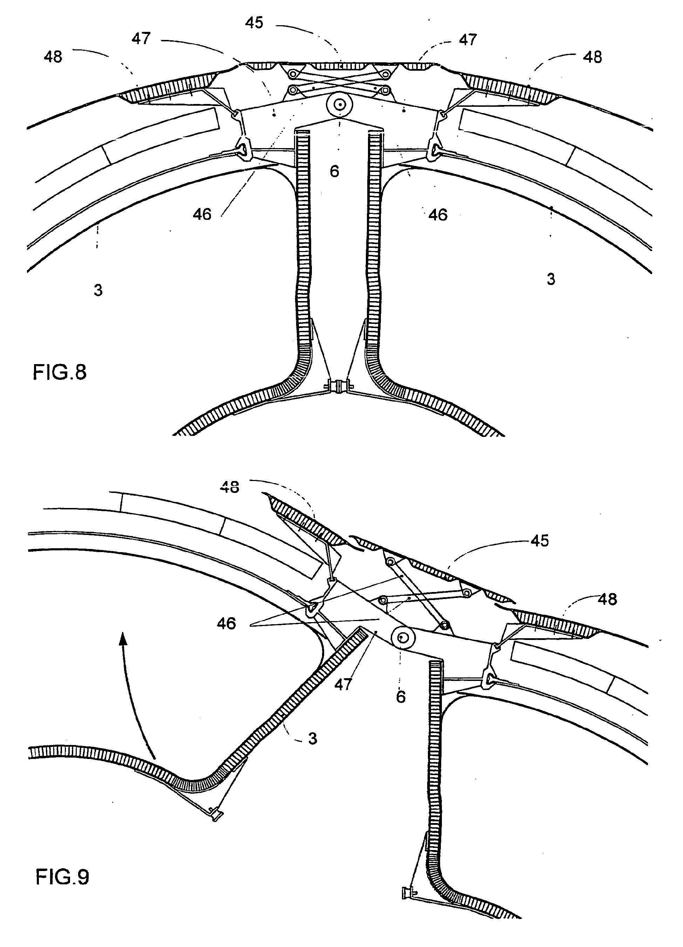

Les figures 8 et 9 représentent une forme de réalisation de l'invention dans laquelle des chapes d'articulation 47 des capots mobiles 3 sont liées l'une à l'autre par un axe d'articulation commun 6, lequel axe 6 est recouvert par un dispositif de carénage aérodynamique mobile 45

Le carénage 45 est suspendu au-dessus de l'axe commun 6 par un ensemble de bielles 46 entrecroisées reliant l'une et l'autre des chapes d'articulation 47 des capots mobiles 3 à un point d'articulation sur un côté opposé du carénage 45.

Sur la figure 8, les deux capots mobiles 3 sont fermés, le carénage 45 assure une jointure entre les parois externes 48 des deux capots 3.

Sur la figure 9, le capot 3 gauche (sur le dessin) est ouvert et sa chape d'articulation 47 pivote autour de l'axe 6. Ce mouvement est répercuté sur les bielles 46 en croisillon qui soulèvent le carénage 45 au dessus des parois externes 48 des deux capots 3, lesquelles glissent sous le carénage 45 de façon à se rapprocher l'une de l'autre.

Ces dispositions permettent de préserver l'aérodynamisme de la nacelle en vol tout en autorisant l'articulation des capots 3 l'un sur l'autre.

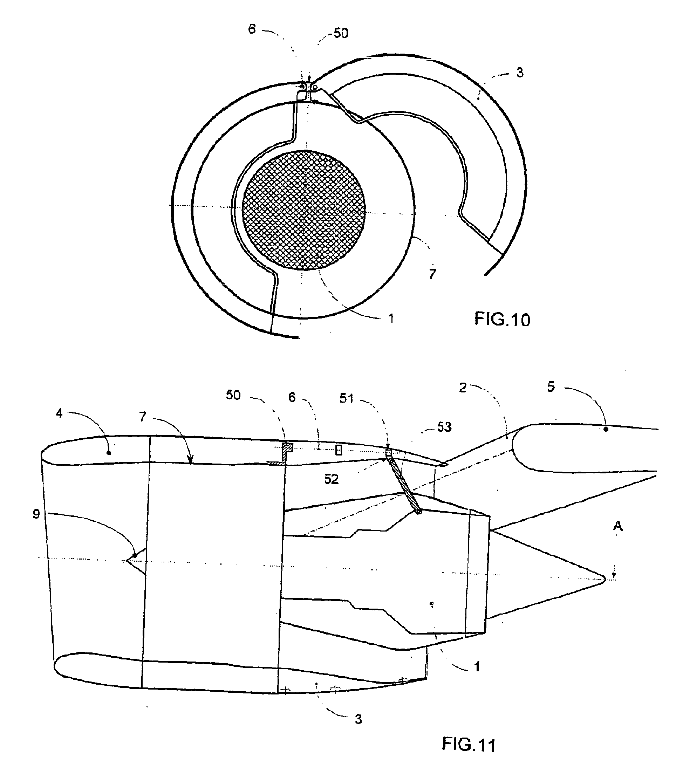

Les figures 10 et 11 représentent une solution avec liaison permanente entre les capots mobiles 3 d'inverseur et le carter de soufflante 7.

Chacun des capots 3 est monté pivotant autour d'un axe d'articulation 6 réalisé entre une même potence 50 solidaire du carter de soufflante 7 et une ferrure 51 reliant les deux capots 3 (voir figure 11).

La ferrure 51 comporte deux oreilles latérales 52 reliées à la structure du turboréacteur 1 par deux bielles de soutien 53 qui forment ainsi une sorte de trapèze ou de triangle isocèles. Les deux bielles de soutien 53 pourraient aussi être entrecroisées. Un jeu est prévu entre chaque bielle de soutien 53 et son point d'attache avec la structure du turboréacteur 1, ou avec l'oreille latérale 52 correspondante de la ferrure 51, pour être consommé lors de l'ouverture de l'un ou l'autre des capots mobiles 3.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle pour turboréacteur (1), comprenant une entrée d'air (4) en amont du turboréacteur (1), une section médiane destinée à entourer une soufflante (9) du turboréacteur (1) et une section aval, la nacelle comportant en outre au moins une paire de capots mobiles (3) disposés de part et d'autre d'un plan vertical longitudinal (S) de symétrie de la nacelle et articulés sensiblement parallèlement à un axe longitudinal (A) de la nacelle de manière à pouvoir s'ouvrir pour donner accès au turboréacteur (1),
**caractérisée en ce que** les capots mobiles (3) sont appariés par des moyens d'attache (8; 47, 51) permettant leur articulation l'un sur l'autre autour d'axes (6) distincts ou confondus, et
**en ce que** chaque capot mobile (3) comporte des moyens de liaison permanente (50, 53) et des moyens (14, 15, 23, 24, 33, 34) pour le lier temporairement, lorsqu'il est fermé, en rotation avec une structure fixe (7) de la nacelle.

2. Nucelle selon la revendication 1, **caractérisée en ce que** ies capots mobiles (3) sont disposés en section médiane de la nacelle.

3. Nacelle selon la revendication 1, **caractérisée en ce que** les capots mobiles (3) sont disposés en section aval de la nacelle.

4. Nacelle selon l'une des revendications 1 à 3, **caractérisée en ce que** la section aval de la nacelle comprend un dispositif d'inversion de poussée.

5. Nacelle selon l'une des revendications 2 à 4, **caractérisée en ce que** ladite structure fixe (7) de la nacelle est un carter (7) destiné à entourer la soufflante (9) du turboréacteur (1).

6. Nacelle selon l'une des revendications 1 à 5, **caractérisée en ce que** lesdits moyens de liaison permanente comprennent un support (50), fixé sur la structure fixe (7) de nacelle, et qui porte les axes d'articulation (6) des capots (3).

7. Nacelle selon la revendication 6, **caractérisée en ce que** l'axe d'articulation de chaque capot (3) est réalisé entre le support (50) et une attache (51) reliant les deux capots (3), ladite attache (51) étant reliée à la structure du turboréacteur (1) par l'intermédiaire d'au moins une et, de préférence, deux bielles de soutien (53).

8. Nacelle selon l'une des revendications 1 à 5, **caractérisée en ce que** chaque capot (3) est lié à la structure fixe (7) de nacelle par l'intermédiaire d'un couteau (12) ménagé dans une structure du capot (3) et d'une gorge périphérique (13) ménagée dans la structure fixe (7) de nacelle, et **en ce que** lesdits moyens de liaison temporaire en rotation comprennent une découpe (15) réalisée dans le couteau (12) et prévue pour recevoir une partie saillante formant butée (14) ménagée dans la gorge périphérique (13).

9. Nacelle selon la revendication 8, **caractérisée en ce que** les positions de la découpe (15) et de la butée (14) correspondante sont déterminées de manière à ce qu'un jeu (J) entre la découpe (15) et la butée (14) soit coplanaire avec l'axe d'articulation (6) du capot (3).

10. Nacelle selon l'une des revendications 1 à 9, **caractérisée en ce que** lesdits moyens de liaison temporaire en rotation comprennent un pêne de verrouillage (23) qui est monté coulissant dans une structure en partie supérieure de chaque capot (3), parallèlement à son axe d'articulation (6), entre une position rétractée et une position d'engagement dans un orifice de retenue (24) de forme adaptée prévu dans la structure fixe (7) de nacelle, et **en ce qu'**un coulisseau d'indexage (25) de forme aiiongée est monté mobile entre lesdits orifices de retenue (24) en partie supérieure de la structure fixe (7) de nacelle et comporte des moyens (28, 29) pour, en cas de retrait d'un pêne (23) hors de son orifice de retenue (24), immobiliser le pêne (23) de l'autre capot (3) en position enclenchée, empêchant ainsi une ouverture simultanée des deux capots (3).

11. Nacelle selon la revendication 10, **caractérisée en ce que** le pêne (23) de chaque capot (3) est apte à s'engager dans un' trou traversant (29) prévu à chaque extrémité du coulisseau (25) et de tendre des moyens élastiques de rappel (26a, 26b) du coulisseau (25), de sorte que le retrait d'un des pênes (23) entraîne une translation du coulisseau (25) vers le pêne (23) du capot (3) resté fermé et une immobilisation de ce dernier au moyen d'un ergot de blocage (28) saillant sur une paroi proximale du trou traversant (29) correspondant et apte à s'engager dans une ouverture transversale (27) du pêne (23).

12. Nacelle selon l'une des revendications 1 à 11, **caractérisée en ce que** lesdits moyens de liaison temporaire en rotation comprennent un crochet de verrouillage (33) qui est monté dans une structure en partie inférieure de chaque capot (3), et articulé parallèlement au capot (3), le crochet de verrouillage (33) étant prévu pour, lorsque le capot (3) est fermé, s'accrocher (en 35) à une base d'amarrage (34) fixée (en 13) à la structure fixe (7) de nacelle, le pivotement du crochet de verrouillage (33) étant commandé par un levier (11) d'ouverture du capot (3) monté pivotant entre des positions d'ouverture et de fermeture dans une enceinte en partie inférieure du capot (3), et **en ce qu'**un crochet de blocage (39) est monté pivotant (en 41) et prévu pour s'accrocher à une extrémité radiale (40) de forme adaptée du levier (11) en vue d'immobiliser ce dernier en position de fermeture, le pivotement du crochet de blocage (39) étant déclenché par un organe de signalisation (38) apte à signaler l'ouverture de l'un ou l'autre des capots (3).

13. Nacelle selon la revendication 12, **caractérisée en ce que** chaque capot (3) comporte en partie inférieure une baguette de signalisation d'ouverture (38) montée mobile en translation, sous l'action d'un ressort de rappel (37), entre une position rétractée et une position saillante par rapport au plan vertical longitudinal (S) de symétrie de la nacelle, les baguettes de signalisation (38) des deux capots (3) venant, lorsque ceux-ci sont fermés, en appui l'une contre l'autre de manière à se maintenir mutuellement en position rétractée, et **en ce que** ledit crochet de blocage (39) présente un ergot latéral (43) de guidage monté coulissant dans une lumière oblongue de guidage (42) ménagée dans la baguette (38) de sorte qu'une translation de la baguette (38) s'accompagne d'un pivotement du crochet (39).

14. Nacelle selon l'une des revendications 1 à 13, **caractérisée en ce que** les capots (3) sont articulés par des chapes d'articulation (47) autour d'un axe d'articulation (6) commun, et **en ce qu'**un dispositif de carénage mobile (45) soutenu au-dessus de l'axe d'articulation (6) commun et relié aux chapes d'articulation (47) des capots (3) par un ensemble de bielles d'articulation (46) entrecroisées, recouvre la zone d'articulation des capots (3) et assure une jointure entre les parois externes (48) des capots (3) afin de préserver l'aérodynamisme de la nacelle lorsque les capots (3) sont fermés.

## Claims

1. A nacelle for a jet engine (1) comprising an air intake (4) upstream of the jet engine (1), a median section intended to surround a fan (9) of the jet engine (1) and a downstream section, the nacelle further comprising at least one pair of mobile cowls (3) positioned one on each side of a longitudinal vertical plane (S) of symmetry of the nacelle and articulated substantially parallel to a longitudinal axis (A) of the nacelle so that they can open to give access to the jet engine (1),
**characterized in that** the mobile cowls (3) are paired with attachment means (8; 47, 51) that allow them to be articulated to one another about separate or coincident axes (6), and
**in that** each mobile cowl (3) comprises means of permanent connection (50, 53) or means (14, 15, 23, 24, 33, 34) for connecting it temporarily, when closed, in terms of rotation to a fixed structure (7) of the nacelle.

2. The nacelle as claimed in claim 1, **characterized in that** the mobile cowls (3) are positioned in the median section of the nacelle.

3. The nacelle as claimed in claim 1, **characterized in that** the mobile cowls (3) are positioned in the downstream section of the nacelle.

4. The nacelle as claimed in one of claims 1 to 3, **characterized in that** the downstream section of the nacelle comprises a thrust reverser device.

5. The nacelle as claimed in one of claims 2 to 4, **characterized in that** said fixed structure (7) of the nacelle is a casing (7) intended to surround the fan (9) of the jet engine (1).

6. The nacelle as claimed in one of claims 1 to 5, **characterized in that** said means of permanent connection comprise a support (50), fixed to the nacelle fixed structure (7) and which bears the pivot axes (6) about which the cowls (3) are articulated.

7. The nacelle as claimed in claim 6, **characterized in that** the pivot axis about which each cowl (3) is articulated is created between the support (50) and an attachment (51) connecting the two cowls (3), said attachment (51) being connected to the structure of the jet engine (1) by means of at least one, and preferably two supporting link rods (53).

8. The nacelle as claimed in one of claims 1 to 5, **characterized in that** each cowl (3) is connected to the nacelle fixed structure (7) by a knife edge (12) formed in a structure of the cowl (3) and a peripheral groove (13) formed in the nacelle fixed structure (7), and **in that** said means of temporary connection in terms of rotation comprise a cutout (15) created in the knife edge (12) and designed to accept a stop-forming projecting part (14) created in the peripheral groove (13).

9. The nacelle as claimed in claim 8, **characterized in that** the positions of the cutout (15) and of the corresponding stop (14) are determined such that a clearance (J) between the cutout (15) and the stop (14) is coplanar with the axis (6) about which the cowl (3) is articulated.

10. The nacelle as claimed in one of claims 1 to 9, **characterized in that** said means of temporary connection in terms of rotation comprise a locking bolt (23) which is slidably mounted in a structure toward the upper part of each cowl (3), parallel to the axis (6) about which it is articulated, between a retracted position and a position of engagement in a retaining orifice (24) of appropriate shape formed in the nacelle fixed structure (7), and **in that** an indexing slide (25) of elongate shape is mounted such that it can move between said retaining orifices (24) in the upper part of the nacelle fixed structure (7) and comprises means (28, 29) which, should a locking bolt (23) become withdrawn from its retaining orifice (24), immobilize the locking bolt (23) of the other cowl (3) in the engaged position thus preventing simultaneous opening of both cowls (3).

11. The nacelle as claimed in claim 10, **characterized in that** the locking bolt (23) of each cowl (3) is able to engage in a through-hole (29) made at each end of the slide (25) and to tension elastic return means (26a, 26b) of the slide (25) so that withdrawal of one of the locking bolts (23) causes the slide (25) to effect a translational movement toward the locking bolt (23) of the cowl (3) that has remained closed and causes the latter to become immobilized by means of a blocking pin (28) projecting from a proximal wall of the corresponding through-hole (29) and able to engage in a transverse opening (27) in the locking bolt (23).

12. The nacelle as claimed in one of claims 1 to 11, **characterized in that** said means of temporary connection in terms of rotation comprise a locking hook (33) which is mounted in a structure in the lower part of each cowl (3) and articulated parallel to the cowl (3), the locking hook (33) being designed to catch (at 35), when the cowl (3) is closed, on an anchoring base (34) fixed (13) to the nacelle fixed structure (7), the pivoting of the locking hook (33) being brought about by a cowl (3) opening lever (11) mounted to pivot between open and closed positions in a space in the lower part of the cowl (3), and **in that** a blocking hook (39) is pivot mounted (41) and designed to catch on a suitably-shaped radial end (40) of the lever (11) with a view to immobilizing the latter in the closed position, the pivoting of the blocking hook (39) being triggered by a signaling member (38) able to signal the fact that one or other of the cowls (3) is open.

13. The nacelle as claimed in claim 12, **characterized in that** each cowl (3) comprises toward the lower part a cowl-open signaling rod (38) mounted such that it can move in terms of translation under the action of a return spring (37) between a position in which it is retracted and a position in which it projects with respect to the longitudinal vertical plane (S) of symmetry of the nacelle, the signaling rods (38) of the two cowls (3) coming, when these cowls are closed, to rest against one another so as to keep one another in the retracted position, and **in that** said blocking hook (39) exhibits a lateral guide pin (43) mounted to slide in an oblong guide slot (42) formed in the rod (38) so that a translational movement of the rod (38) is accompanied by a pivoting of the hook (39).

14. The nacelle as claimed in one of claims 1 to 13, **characterized in that** the cowls (3) are articulated by articulation clevises (47) about a common pivot axis (6), and **in that** a mobile cowling device (45) supported above the common pivot axis (6) and connected to the articulation clevises (47) of the cowls (3) by a collection of interlaced pivot link rods (46) covers the region in which the cowls (3) are articulated and provides a joint between the external walls (48) of the cowls (3) so as to preserve the aerodynamics of the nacelle when the cowls (3) are closed.

## Patentansprüche

1. Gondel für ein Strahltriebwerk (1), umfassend einen Lufteinlass (4) oberhalb des Strahltriebwerks (1), ein mittleres Teilstück, das dazu gedacht ist, ein Gebläse (9) des Strahltriebwerks (1) zu umgeben, und ein nachgelagertes Teilstück, wobei die Gondel ferner mindestens ein Paar beweglicher Verkleidungsbleche (3) umfasst, die auf jeder Seite einer senkrechten Längssymmetrieebene (S) der Gondel positioniert sind und im Wesentlichen parallel zu einer Längsachse (A) der Gondel angelenkt sind, so dass sie sich öffnen können, um Zugang auf das Strahltriebwerk (1) zu geben,
**dadurch gekennzeichnet, dass** die beweglichen Verkleidungsbleche (3) mit Anbringungsmitteln (8; 47, 51) gepaart sind, die es ihnen ermöglichen, miteinander um getrennte oder zusammenfallende Achsen (6) angelenkt zu sein, und
dass jedes bewegliche Verkleidungsblech (3) Mittel für eine dauerhafte Verbindung (50, 53) oder Mittel (14, 15, 23, 24, 33, 34) für ihre zeitweilige Verbindung, wenn sie geschlossen sind, rotationsmäßig mit einer ortsfesten Struktur (7) der Gondel zu verbinden, umfasst.

2. Gondel nach Anspruch 1, **dadurch gekennzeichnet, dass** die beweglichen Verkleidungsbleche (3) in dem mittleren Teilstück der Gondel positioniert sind.

3. Gondel nach Anspruch 1, **dadurch gekennzeichnet, dass** die beweglichen Verkleidungsbleche (3) in dem nachgelagerten Teilstück der Gondel positioniert sind.

4. Gondel nach einem der Ansprüche 1 bis 3, **dadurch gekennzeichnet, dass** das nachgelagerte Teilstück der Gondel eine Schubumkehrvorrichtung umfasst.

5. Gondel nach einem der Ansprüche 2 bis 4, **dadurch gekennzeichnet, dass** die ortsfeste Struktur (7) der Gondel eine Ummantelung (7) ist, die dazu gedacht ist, das Gebläse (9) des Strahltriebwerks (1) zu umgeben.

6. Gondel nach einem der Ansprüche 1 bis 5, **dadurch gekennzeichnet, dass** die Mittel zur dauerhaften Verbindung eine Stütze (50) umfassen, die an der ortsfesten Gondelstruktur (7) befestigt ist, und welche die Schwenkachsen (6) trägt, um welche die Verkleidungsbleche (3) herum angelenkt sind.

7. Gondel nach Anspruch 6, **dadurch gekennzeichnet, dass** die Schwenkachse, um die jedes Verkleidungsblech (3) herum angelenkt ist, zwischen der Stütze (50) und einer Halterung (51), welche die beiden Verkleidungsbleche (3) verbindet, erstellt wird, wobei die Halterung (51) mit der Struktur des Strahltriebwerks (1) über mindestens eine und bevorzugt zwei stützende Anlenkpleuelstangen (53) verbunden ist.

8. Gondel nach einem der Ansprüche 1 bis 5, **dadurch gekennzeichnet, dass** jedes Verkleidungsblech (3) mit der ortsfesten Gondelstruktur (7) durch eine Schneidkante (12), die in einer Struktur des Verkleidungsblechs (3) gebildet ist, und eine umlaufende Nut (13), die in der ortsfesten Gondelstruktur (7) gebildet ist, verbunden ist, und dass die Mittel zur zeitweiligen drehmäßigen Verbindung einen Ausschnitt (15) umfassen, der in der Schneidkante (12) erstellt wird und dazu gedacht ist, ein einen Anschlag bildendes vorstehendes Teil (14) aufzunehmen, das in der umlaufenden Nut (13) erstellt wird.

9. Gondel nach Anspruch 8, **dadurch gekennzeichnet, dass** die Positionen des Ausschnitts (15) und des entsprechenden Anschlags (14) derart bestimmt werden, dass ein Spielraum (J) zwischen dem Ausschnitt (15) und dem Anschlag (14) zu der Achse (6), um welche das Verkleidungsblech (3) herum angelenkt ist, koplanar ist.

10. Gondel nach einem der Ansprüche 1 bis 9, **dadurch gekennzeichnet, dass** die Mittel zur zeitweiligen drehmäßigen Verbindung einen Verriegelungsbolzen (23) umfassen, der gleitend in einer Struktur in Richtung auf den oberen Teil jedes Verkleidungsblechs (3) angebracht ist, parallel zu der Achse (6), um die es angelenkt ist, zwischen einer eingezogenen Position und einer Eingriffsposition in eine geeignet geformte Halteöffnung (24), die in der ortsfesten Gondelstruktur (7) gebildet ist, und dass ein länglich geformtes Schaltgleitstück (25) derart angebracht ist, dass es sich zwischen den Halteöffnungen (24) in dem oberen Teil der ortsfesten Gondelstruktur (7) bewegen kann und Mittel (28, 29) umfasst, die, falls ein Verriegelungsbolzen (23) aus seiner Halteöffnung (24) entnommen wird, den Verriegelungsbolzen (23) des anderen Verkleidungsblechs (3) in der Eingriffsposition festzulegen, wodurch eine gleichzeitige Öffnung der beiden Verkleidungsbleche (3) verhindert wird.

11. Gondel nach Anspruch 10, **dadurch gekennzeichnet, dass** der Verriegelungsbolzen (23) jedes Verkleidungsblechs (3) in der Lage ist, in ein Durchgangsloch (29), das an jedem Ende des Gleitstücks (25) gefertigt ist, einzugreifen und elastische Rückstellmittel (26a, 26b) des Gleitstücks (25) zu spannen, so dass die Entnahme eines der Verriegelungsbolzen (23) das Gleitstück (25) veranlasst, eine Translationsbewegung in Richtung auf den Verriegelungsbolzen (23) des Verkleidungsblechs (3) auszuführen, das geschlossen geblieben ist, und letzteres veranlasst, mittels eines Blockierungsstiftes (28), der aus einer proximalen Wand des entsprechenden Durchgangslochs (29) vorsteht und in eine querliegende Öffnung (27) in dem Verriegelungsbolzen (23) eingreifen kann, festgelegt zu werden.

12. Gondel nach einem der Ansprüche 1 bis 11, **dadurch gekennzeichnet, dass** die Mittel zur zeitweiligen drehmäßigen Verbindung einen Verriegelungshaken (33) umfassen, der in einer Struktur in dem unteren Teil jedes Verkleidungsblechs (3) angebracht ist und parallel zum Verkleidungsblech (3) angelenkt ist, wobei der Verriegelungshaken (33) dazu ausgelegt ist, wenn das Verkleidungsblech (3) geschlossen ist, an einer Verankerungsgrundlage (34), die an der ortsfesten Gondelstruktur (7) befestigt (13) ist, einzuhaken (bei 35), wobei die Verschwenkung des Verriegelungshakens (33) durch einen Öffnungshebel (11) des Verkleidungsblechs (3) herbeigeführt wird, der angebracht ist, um zwischen offenen und geschlossenen Positionen in einem Raum in dem unteren Teil des Verkleidungsblechs (3) zu verschwenken, und dass ein Blockierungshaken (39) drehbar gelagert ist (41) und dazu ausgelegt ist, an einem geeignet geformten radialen Ende (40) des Hebels (11) einzuhaken, um letzteren in der geschlossenen Position festzulegen, wobei die Verschwenkung des Blockierungshakens (39) von einem Meldeelement (38) ausgelöst wird, das in der Lage ist, die Tatsache zu melden, dass das eine oder andere der Verkleidungsbleche (3) offen ist.

13. Gondel nach Anspruch 12, **dadurch gekennzeichnet, dass** jedes Verkleidungsblech (3) in Richtung auf den unteren Teil eine "Verkleidungsblech offen"-Signalstange (38) umfasst, die derart angebracht ist, dass sie sich translationsmäßig unter der Einwirkung einer Rückstellfeder (37) zwischen einer Position, in der sie eingezogen ist, und einer Position, in der sie im Verhältnis zu der senkrechten Längssymmetrieebene (S) der Gondel vorsteht, bewegen kann, wobei die Signalstangen (38) der beiden Verkleidungsbleche (3), wenn diese Verkleidungsbleche geschlossen sind, aneinander zu liegen kommen, um sich gegenseitig in der eingezogenen Position zu halten, und dass der Blockierungshaken (39) einen seitlichen Führungsstift (43) aufweist, der angebracht ist, um in einem länglichen Führungsschlitz (42) zu gleiten, der in der Stange (38) gebildet ist, so dass eine Translationsbewegung der Stange (38) mit einer Verschwenkung des Hakens (39) einhergeht.

14. Gondel nach einem der Ansprüche 1 bis 13, **dadurch gekennzeichnet, dass** die Verkleidungsbleche (3) durch Gelenkösen (47) um eine gemeinsame Schwenkachse (6) herum angelenkt sind, und dass eine bewegliche Verkleidungsvorrichtung (45), die oberhalb der gemeinsamen Schwenkachse (6) getragen wird und mit den Gelenkösen (47) der Verkleidungsbleche (3) durch eine Reihe von verschachtelten drehbaren Anlenkpleuelstangen (46) verbunden ist, den Bereich abdeckt, in dem die Verkleidungsbleche (3) angelenkt sind, und eine Verbindungsstelle zwischen den Außenwänden (48) der Verkleidungsbleche (3) bereitstellt, um die Aerodynamik der Gondel zu bewahren, wenn die Verkleidungsbleche (3) geschlossen sind.
